# EUROPEAN PATENT SPECIFICATION

(11) **EP 3 164 686 B1**
(45) Date of publication and mention of the grant of the patent: **21.08.2019**
(21) Application number: 15747179.8
(22) Date of filing: 01.07.2015
(51) Int. Cl.: G01L 5/00, G01L 1/10, G01L 1/22, B63B 21/00, B63B 21/04, B63B 22/04

(54) **SENSING DEVICE**
SENSORVORRICHTUNG
DISPOSITIF DE DÉTECTION

(30) Priority: 01.07.2014 GB 201411715; 29.10.2014 GB 201419247
(43) Date of publication of application: 10.05.2017
(73) Proprietor: Flintstone Technology Limited, West Pitkerro Industrial Estate Dundee DD5 3RU (GB)
(72) Inventor: SMITH, David, Dundee DD4 7HF (GB); CLAYSON, Andrew, Dundee DD1 3BU (GB); TAYLOR, Richard, Kendal Cumbria LA9 6FF (GB)
(74) Representative: Moreland, David
(86) International application number: PCT/GB2015/051928
(87) International publication number: WO 2016/001668

(56) References cited:
- WO-A1-2004/055394
- WO-A1-2006/109065
- GB-A- 1 577 341
- US-A- 5 078 016
- US-A1- 2003 172 740
- US-A1- 2013 305 817

## Description

### FIELD OF INVENTION

The present invention relates to a sensing apparatus, such as a strain sensing apparatus, for example, a sensing apparatus for a connector, such as a subsea or underwater connector, for example, for connecting a line or lines such as mooring lines, to a subsea structure, such as a submerged turret loading or a submerged turret production buoy. The invention also relates to associated devices, apparatus, structures and methods.

### BACKGROUND TO INVENTION

Mooring lines, e.g. wire, chain or synthetic mooring lines (such as polyester lines) used subsea, for example, in the oil, gas, offshore wind, or tidal energy industries, etc., can be attached to subsea structures by means of a connector. One known type of connector is a connector in which a male part of the connector comprises an eyelet or other means for affixing a line and a female part of the connector comprises means for connecting or mounting the female part to a subsea structure, such as a submerged turret loading or a submerged production buoy. The female part comprises a cavity in which the male part is received. A through passage in the male part can be aligned with a corresponding passage in the female part so that a pin can be inserted into both the male and female parts to lock the two together.

US 5,078,016 A (RUSSO) discloses a *two* piece load cell pin. A pivot pin includes a hollow tubular sleeve having open ends for encircling a removable load cell having strain gauges attached thereto for measuring loads on a pivot joint. When loads are placed on a pivot joint the load cell will deflect and its deflections are detected by a strain gauge which measures the axial deflection of the load cell.

US 2013/305817A1 (MAGNIN et al) discloses a method of measuring loadings in joins in a high-temperature environment and instrumented shaft for implementation, in particular for rear attachment of aircraft turbojet. MAGNIN et al aims to produce an instrumentation making it possible to measure the loadings which pass through mechanical joins between two mechanical structures, so as to best evaluate the dimensions and masses without impairing their mechanical properties of a secure transfer of load." To this end MAGNIN et al proposes "introducing into the zones of transit of the loadings an instrumented component of the form that favours the measurement of shear and its installation. In one embodiment, a zone of transit of loadings consists of an instrumentalized hollow shaft which takes the form of a cylinder able to be introduced into collinear openings in the fittings. It comprises a longitudinal housing into which is introduced an insert composed of a central prop in tight contact with the internal wall of the shaft and connected, on each side, to a flyweight and also in tight contact, by way of multiple tabs away from contact with said internal wall. High-temperature gauges are welded to the tabs so as to measure a variation in electrical resistance corresponding to the bending deformation of the tabs.

GB 1577341 (BRITISH HOOVERCRAFT CORP) discloses a shear pin load cell load measuring equipment. The load measuring equipment includes a shear pin load cell coupling a pivotal joint subject during operation to loads varying both in magnitude and in radial direction, said shear pin load cell having strain-sensitive elements arranged to provide signals significant respectively of load components in two radial directions in the shear pin; and electrical processing circuitry connected to said elements and responsive to said load components-significant signals to compute the magnitude of a load, in any radial direction, giving rise to said signals.

WO 2004/055394 (BSW) discloses a connector for underwater anchorage comprising a probe insertable within a receptacle adapted to be anchored at a fixed location, the probe comprising an internal mandrel having an external ball or roller cage with balls or rollers riding upon respective ramps of the mandrel whereby the balls or rollers may engage the internal wall surface of the receptacle to lock the probe and receptacle together when a load is applied to the mandrel attempting to separate the two parts. Sleeves are spring-loaded apart by springs and a pin is removable to enable the sleeves and to move apart such that a circumferential array of balls ride up associated reverse ramps to lock the sleeve and ball cage with respect to mandrel thus preventing retraction of the balls or rollers and maintaining the probe and receptacle in locked relationship.

WO 2006/109065 (BALLTEC) discloses a subsea connector comprising a female element defining a parallel bore adapted to receive a male element. First releasable locking means are disposed between elements and comprise a sprung cage in which balls are retained for movement in tapered grooves circumferentially spaced around element. As the cage moves relative to element balls protrude from the cage to a greater or lesser extent to lock the elements together. Second locking means prevent relative movement between elements and in a locking release direction of the first releasable locking means. These second locking means comprise lock balls retained in an aperture body disposed between elements.

It is at least one object of at least one embodiment of the present invention to obviate or mitigate at least one problem in the art.

It is at least one object of at least one embodiment of the present invention to improve the measurement of load on the mooring line.

### SUMMARY OF INVENTION

According to a first aspect of the present invention, there is provided a sensing device or apparatus for inserting into a hole, cavity, or receptacle, the sensing device or apparatus comprising:
an elongate member such as a beam or rod;
one or more sensing elements for sensing load, strain, deformation or force in or on the elongate member; wherein:
   the elongate member is provided with at least one engaging portion configured for locking against an inner wall of the hole, cavity or the receptacle, so as to prevent relative motion of the at least one engaging portion with respect to the inner wall of the hole, cavity or receptacle, and whereby
   one or more or each of the engaging portions comprises a ball fixing mechanism.

One or more or each of the engaging portions may comprise a ball and taper or ball and cage fixing mechanism.

The two or more engaging portions are configured or configurable for gripping, fixing, locking or securing against the inner wall (e.g. an inner side wall) of the receptacle, so as to prevent relative motion of the engaging portion and/or an inner wall of the receptacle.

The one or more sensing elements may be configured to measure strain, deformation or force, e.g. a total, overall or average strain, deformation or force, over one or more measuring zones of the elongate member, wherein at least one or each measuring zone may be defined between a pair of engaging portions.

The one or more sensing elements may be provided in or on the elongate member. At least two or each of the sensing elements may be discrete and/or spaced apart, e.g. in a longitudinal direction of the sensing device or apparatus. For example, one or more, e.g. three, four or more, sensing elements may be provided at each of two or more longitudinally spaced apart sensing locations of the sensing device or apparatus.

At least one or each sensing element at one or more or each sensing location may be spaced apart, e.g. spaced apart laterally and/or circumferentially on or within the sensing device or apparatus with respect to at least one or each other sensing element at the respective sensing location. For example, at least one, e.g. two or more, sensing elements at a respective sensing location may be provided in a first plane and at least one, e.g. two or more, other sensing elements at the respective sensing location may be provided in a second plane, which may be obliquely angled or perpendicular to the first plane. For example, one plane may be a vertical plane and the other plane may be a horizontal plane.

At least one or each of the sensing elements may be or comprise a vibrating wire or resonant sensor or sensing element. At least one or each of the sensing elements may be configured to determine a resonant frequency of at least one sensing member and may be configured to determine strain based on the determination of resonant frequency. At least one or each of the sensing members may be or comprise a vibrating or vibratable member, such as a wire. At least one or each of the sensing elements may comprise one or more vibrating devices, which may be configured to vibrate the vibrating or vibratable member, and/or one or more vibration sensors for measuring vibrations of the vibrating or vibratable member, e.g. for measuring the frequency and/or magnitude of vibration of the vibrating or vibratable member. The vibrating devices and/or vibration sensors may be integral and/or the same device may perform the function of both the vibrating device and the vibration sensor. The vibrating or vibratable member may be fixed at both ends, e.g. to respective mountings. At least one or each mounting may be fixed or fixable, e.g. welded, adhered or otherwise fixed, to a wall or other structure of the sensing device or apparatus.

The sensing device or apparatus may be configured to determine load, strain, deformation or force in or on the elongate member, e.g. of or over one or more or each of the measuring zones, using measurements taken by at least two of the sensing elements.

The hole, cavity or receptacle may be comprised in a load pin, locking member or shaft, such as a shaft, load pin or locking member of a connector and/or the shaft, load pin or locking member of a pulley wheel or other load bearing device or structure.

Embodiments of the present invention provide an elongate member for inserting into a hole, cavity or receptacle of a shaft, locking member or load pin assembly for a connector, pulley or other load bearing device or structure, wherein the elongate member comprises at least one, e.g. two or more, engaging portions configured or configurable for gripping, fixing, locking or securing against an inner wall (e.g. an inner side wall) of the receptacle.

One or more or each of the engaging portions comprise a ball fixing mechanism, such as a ball and taper or ball and cage fixing mechanism.

The elongate member comprises one or more sensing elements for sensing load, strain, deformation or force in or on the elongate member.

The elongate member is comprised in the sensing device or apparatus of the first aspect of the present invention.

The elongate member may be provided with three or more engaging portions. One or more or each engaging portion may comprise an interference fit engaging portion for forming an interference fit with the inner wall of the hole, cavity or receptacle.

At least one or more or each engaging portion may be provided in, or arranged to face radially outwardly of, an outer side wall of the elongate member or sensing device or apparatus. The engaging portions may comprise one or more protruding portions or members, which may protrude transversely or radially of at least one adjacent portion of the elongate member, e.g. in at least one configuration of the engaging member, such as a fixing or engaging configuration. The protruding portions may comprise parts of respective balls of a ball and taper or ball and cage arrangement.

One or more or each engaging portion may comprise a one way engaging portion, which may permit movement or insertion of at least part of the elongate member in a first direction, e.g. into or within the receptacle, but may oppose movement in a second direction, which may be opposite the first direction, e.g. a direction of removal of the elongate member from the receptacle.

One or more or each engaging portion may be changable or switchable between a fixing or engaging configuration, in which the engaging portion(s) may be adapted to fix or engage with the hole, cavity or receptacle, e.g. with the inner wall of the hole, cavity or receptacle, and a movable or non-engaging configuration, in which the engaging portion(s) may be adapted to disengage with the receptacle and/or be movable with respect to the hole, cavity or receptacle. The one or more or each engaging portion may be changeable or switchable from the movable or non-engaging configuration to the fixing or engaging configuration, e.g. by moving or applying a force to the elongate member, such as in the second or removal direction. The one or more or each engaging portion may be changable or switchable from the fixing or engaging configuration to the movable or non-engaging configuration, e.g. by moving or applying a force to the elongate member, such as in the first or insertion direction.

One or more or each engaging portion may comprise a ball and taper engagement mechanism. The ball and taper mechanism may comprise at least one and preferably a plurality of balls, such as ball-bearings, which may be provided in corresponding open slots or grooves, wherein a part of the ball may project from the open part of the respective slot or groove. The engaging portions may be generally cylindrical, tubular, curved or annular. The balls and slots may be distributed circumferentially and/or longitudinally in or on the engaging portion. The slot or groove may comprise a tapered slot or groove, for example, such that a radial depth of the slot or groove varies along a longitudinal direction of the elongate member, e.g. such that the radial depth of the slot reduces in the first or insertion direction. The ball and taper mechanism may be arranged such that any contact between the balls and the inner side walls of the receptacle whilst the elongate member is being inserted into the receptacle or moved in the receptacle in the first direction with respect to inner walls of the receptacle pushes the balls toward an end of the slot or groove having a greater radial depth and/or any contact between the balls and the inner side walls of the receptacle whilst the elongate member is being removed from the receptacle or moved in the receptacle in the second direction with respect to the inner walls of the receptacle pushes the balls toward an end of the slot or groove having a lesser radial depth. The lesser radial depth may be such that more of the respective balls project radially outwardly from the slot when the respective ball is at the end of the slot having a lesser depth than when the respective ball is at the end of the slot having a greater depth. The lesser radial depth may be such that the balls are caused to be immovably or fixedly gripped or pressed between the tapered slot or groove and the inner side walls of the receptacle. The greater radial depth may be such that the balls are free to rotate within the slot or receptacle.

One or more or each engaging portion may comprise a spring loaded or biased engaging mechanism. The spring loaded or biased engaging mechanism may be configured to bias the engaging portion into the fixing or engaging configuration. The spring loaded or biased engaging mechanism may be configured such that applying a force or movement opposing or compressing the spring loaded or biased engaging mechanism, e.g. by applying a force or movement to the elongate member in the first or insertion direction, changes or switches the one or more or each engaging portion from the fixing or engaging configuration to the movable or non-engaging configuration.

One or more or each engaging portion may be changable or switchable between the fixing or engaging configuration and the movable or non-engaging configuration by at least one actuator or other switching or moving mechanism. For example, the actuator or switching or moving mechanism may be or comprise a hydraulic, pneumatic, electrical, electromagnetic, piezoelectric actuator or switching or moving mechanism, such as a piston, ram, pressurisable mechanism and/or the like. One or more or each engaging portion may comprise a ball and cage engagement mechanism. The ball and cage engagement mechanism may comprise a cage or sheathe, such as a slidable or movable cage or sheathe, and may comprise a plurality of balls or bearings, at least part of which may protrude transversely or radially outwardly of the cage or sheathe, e.g. in at least one configuration of the engaging member, such as a fixing or engaging configuration. The cage or sheathe may be slidable or movable axially on or along the elongated member or sensing apparatus or device. The cage or sheathe may be coupled to the spring loaded or biased engaging mechanism, e.g. such that the spring loaded or biasing mechanism acts to bias the sheath, for example into the fixed or engaging portion. The cage or sheathe may be coupled or operable by the at least one actuator or other switching or moving mechanism. The cage or sheathe may be configured such that a movement or force applied to the sheath in the first or insertion direction may act against or compress the spring loaded or biased engagement mechanism, e.g. so as to place the ball and cage engagement mechanism in the movable or non-engaging configuration.

One or more or each of the engaging portions may be discrete and/or spaced apart from one or more or each other engaging portion. At least one of the engaging portions, such as at least one first engaging portion, may be provided at, proximate or toward an end of the elongate member. At least one other engaging portion, such as at least one second engaging portion, may be provided at, proximate or toward another end of the elongate member, such as an opposite end to the first engaging portion. At least one engaging portion, such as at least one third engaging portion, may be provided between or intermediate the ends of the elongate member, e.g. in the middle or centrally of the elongate member in a longitudinal direction. The at least one third engaging portion may be provided between or intermediate the first and/or second engaging portions, e.g. equidistant from the first and second engaging portions.

The elongate member may comprise one or more non-gripping or non-fixable or non-engaging portions between one or more or each of the engaging portions.

At least two or each of the sensing elements may be discrete and/or spaced apart, e.g. in a longitudinal direction of the sensing device or apparatus. One or more, e.g. three, four or more, sensing elements may be provided at each of two or more longitudinally spaced apart or distributed sensing locations of the sensing device or apparatus.

At least one or each sensing element at one or more or each sensing location may be distributed or spaced apart, e.g. distributed or spaced apart laterally and/or circumferentially around the sensing device or apparatus with respect to at least one or each other sensing element at the respective sensing location. For example, at least one, e.g. two or more sensing elements at a respective sensing location may be provided in a first plane and at least one, e.g. two or more other sensing elements at the respective sensing location may be provided in a second plane, which may be obliquely angled or perpendicular to the first plane. For example, at least one of the sensing elements may be spaced vertically from at least one other of the sensing elements. At least one to the sensing elements may be spaced horizontally from at least one other of the sensing elements.

The sensing device or apparatus or elongate member may comprise one or more reduced diameter portions, which may comprise recesses, such as external recesses, which may be provided between the engaging portions of one or more pairs of engaging portions. At least one or each of the reduced diameter portions may be circumferential, e.g. the at least one or each reduced diameter portions may extend at least part or all of the way around the circumference of the sensing device or apparatus or elongate member. One or more or each sensing element or sensing location may be provided in or correspond with a respective reduced diameter portion. One or more or each reduced diameter portion may be provided adjacent, in contact with or proximate one or more respective engaging portions.

At least one and optionally two or more of the sensing elements and/or sensing locations may be provided between the engaging portions of one or more or each pair of neighbouring or consecutive engaging portions. Respective sensing elements and/or sensing locations may be provided towards, proximate or adjacent at least one or both of the engaging portions of the one or more or each pair of neighbouring or consecutive engaging portions. At least one first sensing element or sensing location may be provided towards, proximate or adjacent one of the engaging portions of the or each pair of engaging portions and at least one second sensing element or sensing location may be provided towards, proximate or adjacent the other of the engaging portions of the or each pair of engaging portions. The first and second sensing elements may be spaced apart. At least one of the sensing elements and/or locations may be provided toward, proximate or adjacent the first and/or second (e.g. the end) engaging portion(s), e.g. on a side of the first and/or second engaging portion(s) towards the centre of the elongate member in a longitudinal direction of the elongate member. At least one or two or more of the sensing elements and/or sensing locations may be provided toward, proximate or adjacent the third (e.g. the centre) engaging portion. For example, at least one sensing element and/or sensing location may be provided on one or both sides of the third engaging portion in the longitudinal direction of the elongate member. At least one or each of the sensing elements may be provided in or on one or more or each of the non-gripping or non-fixable or non-engaging portions.

One or more of the sensing elements may be provided on or toward a first or upper surface of the elongate member. One or more of the sensing elements may be provided on or toward a second surface, that may be opposite the first surface in a radial or transverse direction, e.g. on a lower surface, of the elongate member.

One or more or each of the sensing elements may be provided within the sensing device or apparatus, e.g. in an interior part of the sensing device or apparatus. The sensing device or apparatus may comprise one or more slots or openings, which may provide communication between an interior part of the sensing device or apparatus, e.g. the interior part in which at least one or each of the sensing devices are located, and the exterior of the sensing device or apparatus. The slots or openings may be provided at one or more or each reduced diameter portion.

The sensing device or apparatus may be configured to determine stress, strain, deformation or load over one or more or each of the measurement areas (e.g. defined by respective consecutive pairs of engaging portions) from measurements of respective two or more longitudinally or axially spaced apart sensing elements provided in the respective measurement area, e.g. at each end of the respective measurement area. The determined stress, strain, deformation or load may be a total or overall stress, strain, deformation or load for the given measurement area.

At least one or each of the sensing elements may be or comprise a vibrating wire or resonant sensor or sensing element. At least one or each of the sensing elements may be configured to determine a resonant frequency of at least one sensing member and may be configured to determine strain based on the determination of resonant frequency.

At least one or each of the sensing members may comprise a vibrating or vibratable member, such as a wire. At least one or each of the sensing elements may comprise one or more vibrating devices, which may be configured to vibrate the vibrating or vibratable member, and/or one or more vibration sensors for measuring vibrations of the vibrating or vibratable member, e.g. the frequency and/or magnitude of vibration of the vibrating or vibratable member. The vibrating devices and/or vibration sensors may be integral and/or the same device may perform the function of both the vibrating device and the vibration sensor. The vibrating or vibratable member may be fixed at either end, e.g. to respective mountings. At least one or each mounting may be fixed or fixable, e.g. welded, adhered or otherwise fixed, to a wall or other structure of the sensing device or apparatus.

The elongate member may be hollow and/or define one or more passages, channels or conduits, which may be for containing, routing or receiving at least one or each of the sensing elements and/or one or more cables from at least one or each of the sensing elements. The passages, channels or conduits may be provided within and/or on an outer surface of the elongate member.

One or more or each of the sensing elements may comprise a strain sensor, which may be configured to measure bending strain, e.g. not shear strain and/or not in a shear plane. However, in some applications, shear strain may be additionally or alternatively measured or measurable, e.g. by providing one or more pairs of adjacent or proximate engaging portions.

The elongate member or sensing device or apparatus may be or comprise a generally tubular or cylindrical member. However, the elongate member may comprise other configurations, such as an I-beam or other configuration that would be apparent to a skilled person. The elongate member may be metallic, e.g. formed from steel, such as stainless steel. The elongate member have a maximum diameter (i.e. in a radial direction) of less than 300mm, for example, less than 260mm, such as less than 230mm, e.g. less than 215 mm.

According to a second aspect of the present invention there is provided a shaft, locking device or load pin assembly, the shaft, locking device or load pin assembly comprising a further elongate member or pin, the further elongate member or pin comprising or defining a hole, cavity or receptacle, the hole, cavity or receptacle being provided with or configured to receive the sensing device or apparatus of the first aspect of the present invention.

The hole, cavity or receptacle may comprise a through hole such as longitudinal through hole.

The further elongate member or pin may be an elongate member or pin for locking or fixing a connector, e.g. an elongate member or pin for locking or fixing a first part of the connector, such as a male part, to a second part of the connector, such as a female part. The further elongate member or pin may be insertable in or through an aperture or passage in both the first or male part and the second or female part, e.g. to lock the two parts together.

The pin may be an elongate pin. The pin may comprise a load pin. The receptacle, hole or cavity may be an elongate receptacle, hole or cavity, which may extend in a longitudinal direction of the further elongate member or pin. The receptacle, hole or cavity may be at least partially or wholly provided inside the further elongate member or pin.

The shaft, locking device or load pin assembly may be comprised in a pulley or other load bearing device or structure, e.g. the shaft, locking device or load pin assembly may be or comprise a shaft for supporting or mounting a pulley wheel.

The sensing device or apparatus may be fixed and/or constrained at areas of, in use, low stress in the further elongate member or pin. The sensing device or apparatus may be fixed, constrained, engaged with, or fitted to the receptacle, hole or cavity, e.g. to an inner wall of the receptacle, hole or cavity, at two or more locations and optionally three or more locations, which may be longitudinally spaced locations. The sensing device or apparatus may be locked or fixed against relative rotation and/or movement of the sensing device or apparatus and the further elongate member or pin at the fixing locations, e.g. to provide discrete, spaced apart fixing locations, e.g. at which the engaging portions of the sensing device or apparatus may be locked against movement relative to the corresponding parts of the inner wall of the hole, cavity or receptacle.

The sensing device or apparatus may be fixed, constrained, engaged with, or fitted to the receptacle, hole or cavity, e.g. to an inner wall of the receptacle, hole or cavity at, toward or proximate one or both ends of the further elongate member or pin and/or receptacle, hole or cavity. The sensing device or apparatus may be fixed, constrained, engaged with, or fitted to the receptacle, hole or cavity, e.g. to an inner wall of the receptacle, hole or cavity at, toward or proximate the centre of the further elongate member or pin and/or receptacle, hole or cavity. The sensing device or apparatus may be fixed and/or constrained by engagement and/or gripping of one or more or each of the engagement portions of the sensing device or apparatus with the receptacle, hole or cavity, e.g. with an inner wall of the receptacle, hole or cavity, such as an inner side wall of the receptacle, hole or cavity. For example, engagement portions of the sensing device or apparatus may engage or grip or be configured to engage or grip the receptacle, hole or cavity, e.g. the inner wall of the receptacle, hole or cavity, for example, at, proximate or adjacent one or both ends and/or the centre of the further elongate member or pin and/or receptacle, hole or cavity.

The sensing device or apparatus may be configured to determine load and/or stress and/or bending and/or strain and/or deformation of the further elongate member or pin. The sensing device or apparatus may be calibrated for a given load, which may be a non-zero load, such as greater than 40%, for example greater than 60%, e.g. 70% or more of the maximum breaking load of the further elongate member or pin.

The sensing device or apparatus may be arranged inside the receptacle, hole or cavity such that a long axis of the elongate member of the sensing device or apparatus is parallel or coaxial with a long axis of the further elongate member or pin. At least two and optionally three of more of the engagement portions of the sensing device or apparatus may be coaxially or linearly arranged inside the receptacle, hole or cavity when the further elongate member or pin is in an unloaded or strained condition.

The shaft, locking device or load pin assembly may be configured to operate in an elastic region and/or to deform in an elastic manner, e.g. outwith a plastic deformation region and/or to not deform in a plastic manner.

The further elongate member or load pin may act as a "master", e.g. it may be bent or deformed by a force acting directly on it. The elongate member within the hole, cavity or receptacle of the further elongate member or load pin may be a "slave", e.g. the deformed shape of the further elongate member or load pin may be replicated in the elongate member.

The further elongate member or pin may comprise a locking or fixing mechanism for locking or fixing the further elongate member or pin, e.g. to the first and/or second parts of the connector. The locking or fixing mechanism may comprise a rotatable locking or fixing mechanism such as a screw thread or a bayonet fitting.

According to a third aspect of the present invention there is provided a connector or line handling apparatus, such as a subsea or underwater connector, the connector or line handling apparatus comprising at least a first part, a second part and a shaft, locking device or load pin assembly according to the second aspect.

The first part may be mountable, lockable or fixable to the second part using the shaft, locking device or load pin assembly.

One of the first and/or second parts may be or comprise a male part. The other of the first and/or second parts may be or comprise a female part. At least part of the male part may be receivable in the female part.

One of the first and/or second parts may comprise a pulley wheel. The other of the first and/or second parts may comprise a pulley wheel mount. The shaft, locking device or load pin may be or comprise a shaft of the pulley wheel.

The connector may be or comprise a connector for connecting a line or lines such as mooring lines, to a subsea or underwater structure, such as a submerged turret loading or a submerged turret production buoy.

The first part of the connector may comprise means for connecting to the one or more lines, such as mooring lines.

The second part of the connector may comprise means for connecting to the subsea or underwater structure, e.g. the submerged turret loading or the submerged turret production buoy.

The connector may further comprise means for aligning, e.g. self-aligning the first part and the second part with respect to one another.

The means for aligning the first and second part may comprise first and second means carried by or provided on the first and second parts, respectively.

The first and second alignment means may co-act, in use, when the first and second parts are brought together.

The first alignment means may comprise at least one first protrusion.

The second alignment means may comprise at least one second protrusion.

The at least one first and second protrusions may co-act, in use, and rotate the first and second parts with respect to one another around a longitudinal axis, when the first and second parts are brought together.

One or both of the first and/or second part may comprise an aperture and/or passage for receiving at least part of the locking device or load pin assembly. The aperture or passage of the first and/or second part may be a through passage. The apertures or passages of the first and/or second parts may be aligned or alignable, e.g. using the means for aligning. When aligned, the apertures and/or passages of the first and second parts may be aligned so as to receive the locking device or load pin assembly therethrough.

The first and/or second parts may comprise a receiving portion for cooperating with the fixing or locking mechanism of the locking device or load pin assembly in order to fix or lock the locking device or load pin assembly to or in the first and/or second parts.

At least one of the first and/or second parts, e.g. the male part, may comprise a mooring connector, such as an eyelet. At least one or both of the male and/or female parts may comprise or be comprised in a BTC, SMC or Fairlead connector.

According to a fourth aspect of the present invention there is provided a method of inserting a sensing device or apparatus according to the first aspect into a receptacle, hole or cavity, such as a receptacle, hole or cavity in a shaft, locking device or load pin assembly.

The method may comprise inserting the sensing device or apparatus or elongate member into the receptacle, hole or cavity and engaging, fixing, fitting or gripping an inner wall of the receptacle, hole or cavity with at least one, e.g. two or more and optionally three or more of the engaging portions of the sensing device or apparatus or elongate member. The method may comprise changing or switching the engaging portions of the sensing device or apparatus between the movable/non-engaging configuration and the fixing or engaging configurations, e.g. by applying a removing or withdrawing force or motion.

According to a fifth aspect of the present invention there is provided a structure comprising or configured to receive a shaft, locking device or load pin assembly according to the second aspect of the present invention.

According to a sixth aspect of the present invention is a locking device with a hole or receptacle for receiving a sensing apparatus or device according to the first aspect of the present invention.

It will be appreciated that features analogous to those described above in relation to any of the above aspects may be individually and separably or in combination applicable to any of the other aspects.

Apparatus features analogous to, or configured to implement, those described above in relation to a method and method features analogous to the use and fabrication of those described above in relation to an apparatus are also intended to fall within the scope of the present invention.

### BRIEF DESCRIPTION OF DRAWINGS

Embodiments of the present invention will now be described by way of example only, and with reference to the accompanying drawings, which are:
- **Figure 1**: a schematic view of an assembled and locked connector;
- **Figure 2**: a schematic view of a female part of the connector of Figure 1;
- **Figure 3**: a schematic view of a male part of the connector of Figure 1;
- **Figure 4**: a schematic view of a pin of the connector of Figure 1;
- **Figure 5**: a schematic view of a sensing apparatus having ball and taper engaging mechanisms;
- **Figure 6**: a schematic view of a part of the sensing apparatus of Figure 5 showing one of the ball and taper engaging mechanisms;
- **Figure 7**: a schematic view of a part of a sensing apparatus having spring loaded ball and cage engaging mechanisms;
- **Figure 8**: a schematic view of a sensing apparatus having the ball and cage engaging mechanism of Figure 7;
- **Figure 9**: a perspective cross sectional view of the sensing apparatus of Figure 5 located in a pin, such as that of Figure 4;
- **Figure 10**: a cross sectional side view of the sensing apparatus of Figure 5 located in a pin, such as that of Figure 4;
- **Figure 11**: a perspective schematic view of a sensing apparatus located in a pin, such as that of Figure 4;
- **Figure 12**: a stress map of the sensing apparatus of Figure 5 when deformed in use;
- **Figure 13**: a schematic view of another sensing apparatus having ball and taper engaging mechanisms;
- **Figure 14**: a schematic view of a sensor for use in the sensing apparatus of Figure 5 or Figure 13;
- **Figure 15**: a simplified schematic cross section of the sensor of Figure 14;
- **Figure 16**: a schematic view of the sensor of Figure 14 being set by a setting tool;
- **Figure 17**: an alternative sensor for use in the sensing apparatus of Figure 5 or Figure 13;
- **Figure 18**: a detail cross-sectional view of the sensing apparatus of Figure 13;
- **Figure 19**: a detail side view of the sensing apparatus of Figure 13;
- **Figure 20**: a cross-sectional view of a load pin for the connector of Figures 1 to 3, the load pin comprising the sensing apparatus of Figure 13; and
- **Figures 21 and 22**: strain maps of the sensing apparatus of Figure 13 whilst undergoing a shear strain and a bending strain respectively.

### DETAILED DESCRIPTION OF DRAWINGS

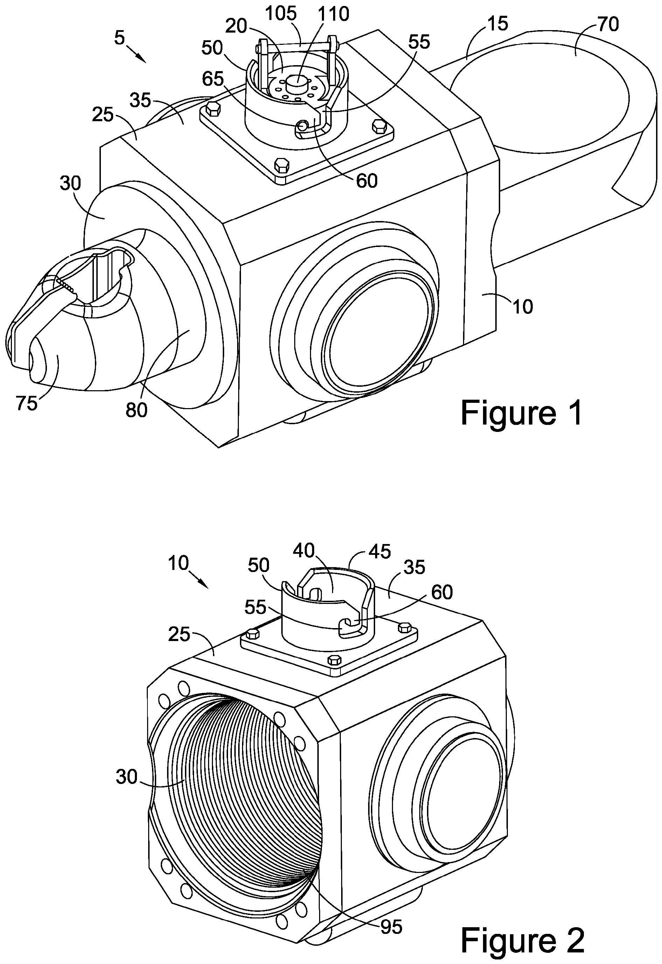

Referring to Figure 1, there is shown a connector 5 for connecting a line (not shown) to a subsea structure (also not shown). The connector 5 comprises a female part 10, a male part 15 and a load pin 20. The female part 10 is configured to be comprised in or attached to the subsea or underwater structure such as a submerged turret loading or a submerged turret production buoy, or the like.

As further illustrated in Figure 2, the female part 10 comprises a hollow main body part 25 that defines a receiving channel 30 there-through for receiving the male part 15. The main body 25 is formed from stainless steel or other suitable material. A surface 35 of the female part 10, such as a top or side surface, is provided with a pin aperture 40, extending transversely to the receiving channel 30. The pin aperture 40 forms a passage between the receiving channel 30 and the surface 35 such that the load pin 20 can be inserted from a location external to the female part 10, through the pin aperture 40, such that part of the pin extends into the receiving channel 30.

The pin aperture 40 is also provided with a pin locking member 45 in the form of a projection 50 having a shaped slot 55 defining a flange 60 such that lock members in the form of bayonet projections 65 on the load pin 20 can be inserted into the slot 55 of the pin locking member 45 and then rotated and subsequently moved in a withdrawing direction to locate the bayonet projections 65 of the load pin 20 under and behind the flange 60 so as to inhibit withdrawal of the load pin 20.

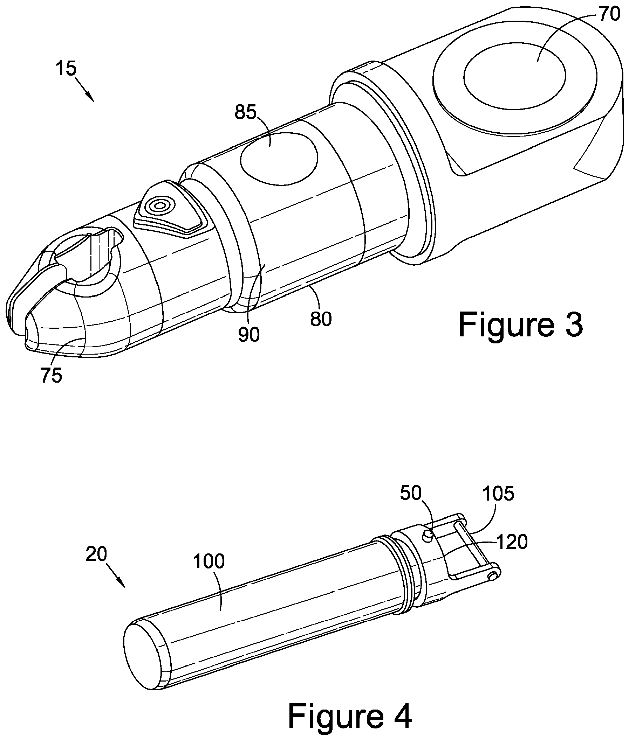

As shown in Figure 3, the male part 15 comprises an elongate pin member having an eyelet 70 for attaching to the mooring line at one end and a pointed section 75 at the other end for guiding the male part 15 when being inserted into the receiving channel 30 of the female part 10. A cylindrical shaft portion 80 of the male part 15 is provided between the eyelet 70 and the pointed section 75. A through hole 85 is provided transversely through the shaft 80 for receiving part of the load pin 20 in use.
Optionally, the male part 15 is provided with a projection or cam surface 90 for cooperating with a corresponding projection or cam surface (not shown) projecting from an interior side wall surface 95 of the receiving channel 30 of the female part 10 so as to rotate the male 15 part during insertion of the male part 15 into the receiving channel 30 of the female part 10 so as to align the through hole 85 of the male part 15 with the pin aperture 40 of the female part 10.

As can be seen from Figure 4, the load pin 20 comprises an elongate shaft portion 100 with a handle portion 105 at one end. The pair of opposing lock members in the form of bayonet projections 65 extend transversely or radially from a portion of the shaft 100 towards the handle portion 105, the lock members 100 being configured to be received in the slot 55 of the pin locking member 45 of the female part 10 in order to secure the load pin 20 in position.

It will be appreciated that the connector 5 is operable in use to connect a line, for example, that is attached to the eyelet 70 of the male connector 15 to the subsea structure attached to the female part 10 by inserting the male part 15 into the receiving channel 30 of the female part 10 and then locking the male and female parts 10, 15 together by inserting the load pin 20 into both the pin aperture 40 of the female part 10 and the through hole 85 of the male part 15 and locking the load pin 20.

It is desirable to be able to monitor a load that is put on the connector 5. This can be measured via a strain gauge placed in the load pin 20, in order to measure strain and/or bending in the load pin 20.

One possibility for doing this is to provide a cylinder within a cavity in the pin. Circumferential grooves can be cut into the cylinder so as to establish defined shear planes in the cylinder. Strain gauges can be located in a bore in the centre of the cylinder in order to measure the strain in the shear planes.

However, in this case, the pin should be operated entirely within the elastic region of the material. The design may not tolerate any plastic deformation since the strain gauge is provided at regions associated with a designed in shear plane such that any permanent deformation may affect the "zero point" setting of the strain gauge. As such, very large diameter pins may be required in order to cope with measurements of high strain, e.g. from 70% to 100% of the maximum breaking load. However, significantly increasing the pin size may require a corresponding increase in the size of the other connector components, which may significantly increase the cost and weight and reduce the ease of handling and operation of the connector. Furthermore, due to clearances in the pin aperture in the female part and the pin receiving through hole in the male part, using the above pin arrangement could lead to a mix of bending and shear in use, which would be undesirable.

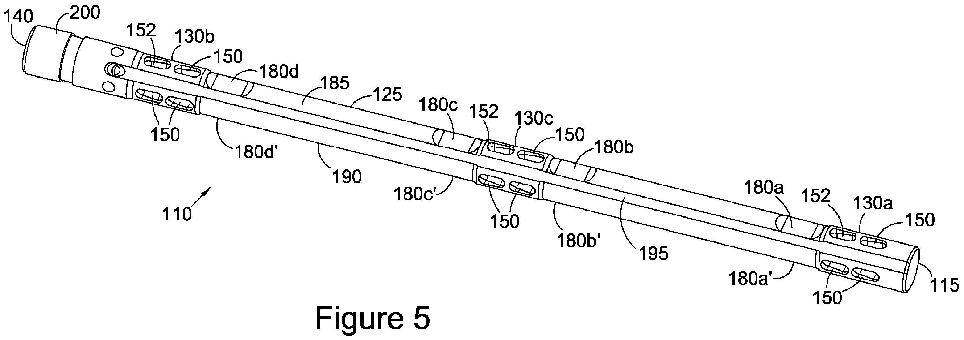

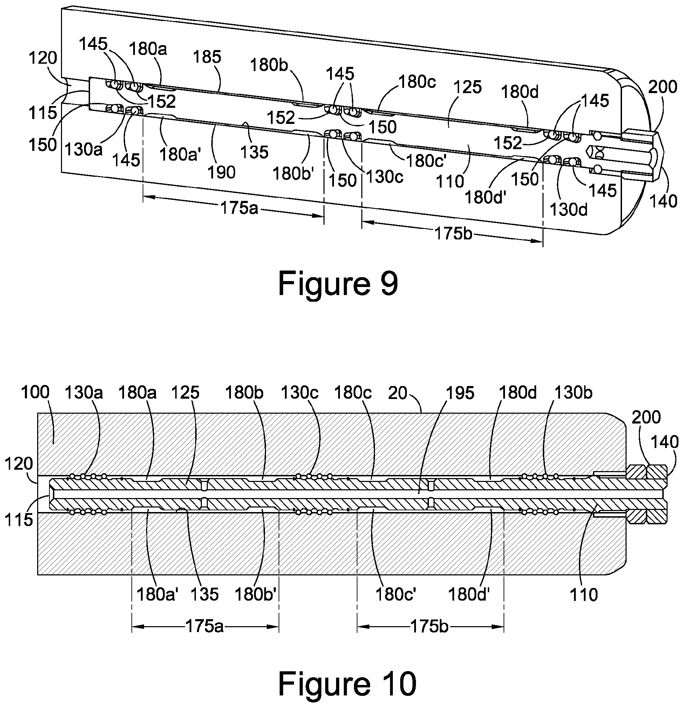

According to embodiments of the present invention shown in Figures 5 to 12 are sensing apparatus 110 that can be located inside a load pin 20 of a pin locked connector 5, such as that shown above in Figures 1 to 4. The sensing apparatus 110 is inserted or insertable, with a distal end 115 of the sensing apparatus 110 inserted first, into a corresponding suitably sized receptacle 120 provided in the load pin 20. The receptacle 120 and thereby the sensing apparatus 110 extends longitudinally within the load pin 20. In the example shown in Figures 9, 10 and 11, the receptacle 120 and sensing apparatus 110 extend along a longitudinal axis of the load pin 20.

As shown particularly in Figures 5, 8, 9 and 10 the sensing apparatus 110 comprises an elongate member 125 in the form of a stainless steel cylindrical member. The sensing apparatus 110 is provided with a plurality of engaging mechanisms 130a, 130b, 130c, 130a', 130b', 130c' for engaging an inner side wall 135 of the receptacle 120 in the load pin 20.

In one particular example, as shown in Figures 5, 6, 9 and 10, three ball and taper engaging mechanisms 130a, 130b, 130c are provided spaced apart in a longitudinal direction of the elongate member 125. In particular, a first engaging mechanism 130a is provided at the distal end 115 of the elongate member 125, a second engaging mechanism 130b is provided adjacent or proximate a proximal end 140 of the elongate member 125 and a third engaging mechanism 130c is provided centrally between the first and second engaging mechanisms 130a, 130b, i.e. such that the third engaging mechanism 130c is generally equidistant from the first and second engaging mechanisms 103a, 130b.

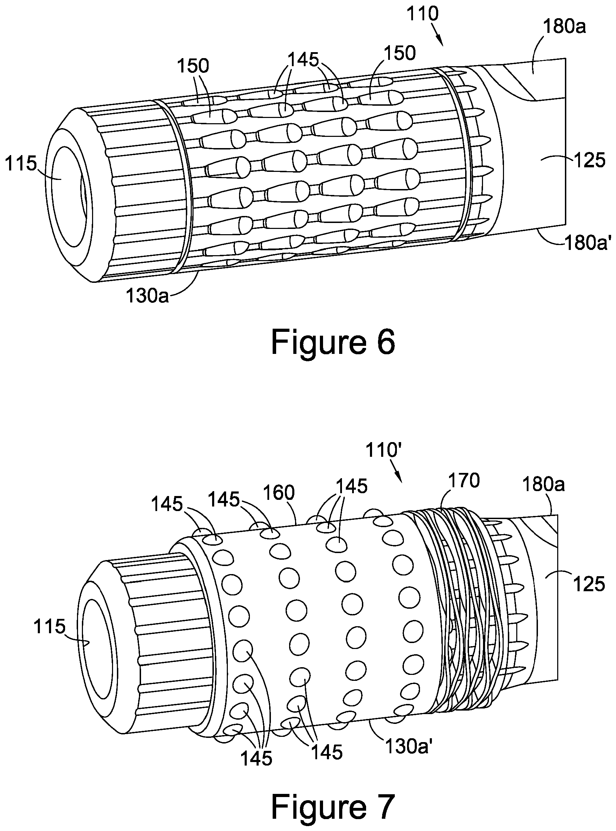

The ball and taper engaging mechanisms comprise a plurality of ball bearings 145 (see Figure 6), wherein most of the bearing 145 is confined inside a tapered open slot 150, with the remaining part of the bearing 145 protruding radially outwardly from the slot 150. The tapering of the slot 150 is such that the depth of the slot 150 reduces gradually towards the distal end 115 of the elongate member 125. In this way, when the sensing apparatus 110 is inserted into the receptacle 120 (with the distal end 115 being inserted first), any contact between the ball bearings 145 and the inner side walls 135 of the receptacle 120 acts to push the bearings 145 toward the deeper end of the slot 150 such that the ball bearings 145 are not tightly gripped or pressed and are free to rotate. This may allow the sensing apparatus 110 to be inserted easily. However, once the sensing apparatus 110 has been inserted into the receptacle 120, any contact between the ball bearings 145 and the inner side walls 135 of the receptacle 120 during a withdrawing force, action or motion of the sensing apparatus 110 acts to push the ball bearings 145 towards the shallower end of the tapered slot 150, thereby forcing the ball bearings 145 transversely or radially outwardly such that the ball bearings 145 are tightly pressed between the inner wall of the receptacle 135 and a tapered surface 152 of the slot 150. In this way, the bearings 145 apply a gripping or fixing force between the tapered surface 152 of the slot 150 of the sensing apparatus and the inner side wall 135 of the receptacle 120 in the load pin 20 so as to lock or fix the sensing apparatus 110 against removal and prevent relative motion between the load pin 20 and the sensing apparatus 110 at these locations. It will be appreciated that the sensing apparatus 110 is locked to or grips the pin at a plurality of distinct, spaced apart locations 155a, 155b, 155c, which in this particular example includes three distinct, spaced apart locations, 155a, 155b, 155c namely at either end of the receptacle 120 and in the centre of the receptacle 120 in a longitudinal direction of the receptacle 120.

The use of a ball and taper mechanism in this particular application provides a sufficiently secure grip, whilst being quick and easy to install. In addition, the ball and taper effectively provides a "one way" insertion mechanism, that resists insertion of the sensing apparatus the wrong way round and also facilitates easy movement of the sensing apparatus whilst it is being inserted but once inserted provides an automatic lock against removal of the sensing apparatus 110.

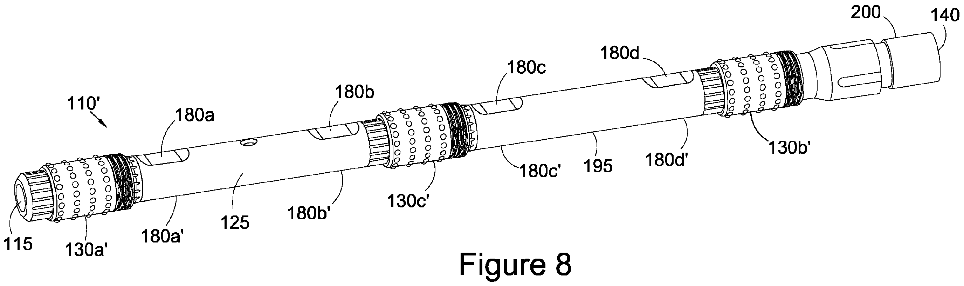

Although the engaging mechanisms 130a, 130b, 130c are advantageously ball and taper mechanisms, it will be appreciated that other mechanisms can be used. For example, a spring loaded or biased cage and ball arrangement 130a', 130b', 130c' can be used, as shown in Figures 7 and 8, which can be less sensitive to gravity and other forces on the engaging mechanism. The ball and cage engagement mechanism 130a', 130b', 130c'is similar to the ball and taper mechanism but a majority part of each of the ball bearings 145 is retained within a slidable sleeve 160 or cage, which has suitably sized apertures 165 to allow the remaining part of each ball 145 bearing to protrude transversely or radially outwardly from the aperture 165 of the sleeve or cage 160. The sleeve or cage 160 is spring loaded, e.g. using a compression spring, spring washer, elastomeric member or other spring or biasing means 170 known in the art, in order to bias the sleeve 160 or cage toward an engaging or locking configuration in which the sleeve 160 pushes the ball bearings up a ramped or tapered surface similar to that of Figure 9 so that the ball bearings 145 are forced radially outwardly. In this case, the ramped surfaces are ramped upward toward the distal (insertion) end of the sensing apparatus 110 and the spring 170 also serves to bias the sleeve 160 or cage towards the distal or insertion end 115 of the sensing apparatus 110. In this way, upon insertion of the sensing apparatus 110 into the receptacle 120, any contact of the ball bearings 145 with the inner side wall 135 of the receptacle 120 serves to push the sleeve 160 or cage back against the spring 170, thereby compressing the spring 170 and moving the ball bearings 145 down the ramped surface such that they are not gripped and are free to rotate, thereby facilitating easy insertion of the sensing apparatus 110. However, when the inserting motion is stopped (e.g. when the sensing apparatus 110 is fully inserted) the spring 170 acts to bias the sleeve 160 and thereby the balls 145 into a configuration in which they are squeezed between the ramped surface and the inner side wall 135 of the receptacle 120. In this case, any motion or force applied to the sensing apparatus 110 in a direction that would remove the sensing apparatus 100 from the receptacle 120 instead only serves to force the ball bearings 145 further up the ramped surface, thereby increasing the pressure exerted by the ball bearings 145 on the ramped surface and the inner side wall 135 of the receptacle 120, thereby increasing the force resisting removal of the sensing apparatus 110 and fixing the engaging mechanisms 130a', 130b', 130c' of the sensing apparatus 110 with respect to the corresponding portions of the inner side walls 135 of the receptacle 120.

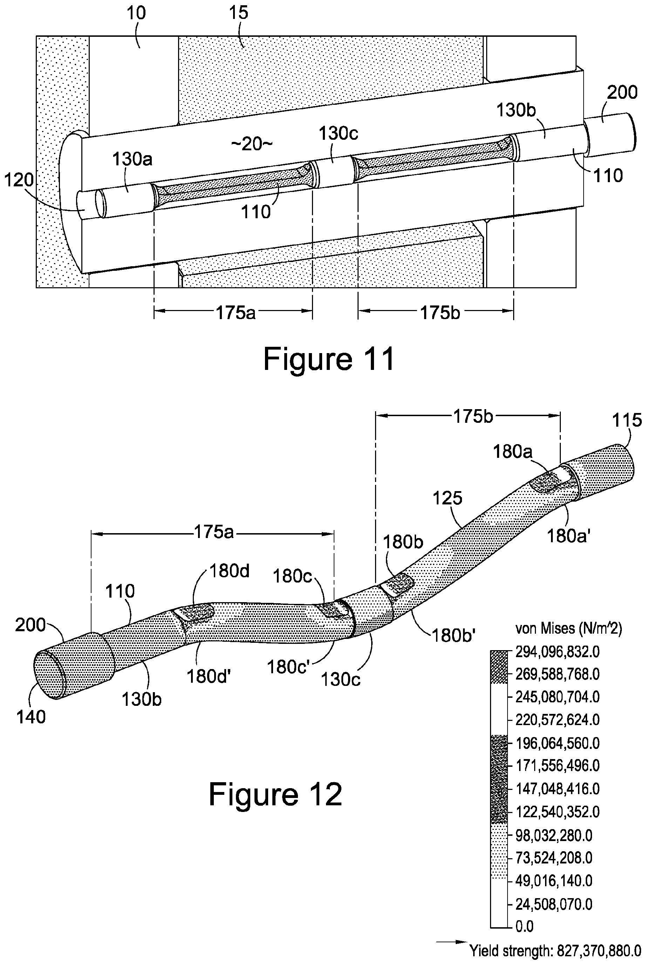

The sensing apparatus 110 is configured to sense a bulk or gross movement, load or strain, i.e. over a longitudinal length of the sensing apparatus 110 between the discrete, spaced apart portions 155a-155c where the sensing apparatus 110 is fixed to the inner side wall 135 of the receptacle 120, i.e. at the engaging mechanisms 130a, 130b, 130c, 130a', 130b', 130c'. In this way, rather than measuring at discrete points or in discrete shear planes, the measurement takes place over a measurement zone 175a, 175b formed between pairs of engaging mechanisms 130a, 130b, 130c, 130a', 130b', 130c', as illustrated particularly in Figures 11 and 12. In the above examples, three engaging mechanisms 130a, 130b, 130c, 130a', 130b', 130c' are provided, one at each end of the receptacle 120 and one in the centre in the longitudinal direction, such that two bulk or gross deformations are measured / two measurement zones 175a, 175b are provided, i.e. between the distal end and the centre of the receptacle 120/load pin 20 and between the proximal end and the centre of the receptacle 120/load pin 20.

In order to measure each of the bulk or gross deformations, loads or strains, the sensing apparatus 110 is provided with sensors 180a, 180b, 180c, 180d, 180a', 180b', 180c', 180d' adjacent each engaging mechanism 130a, 130b, 130c, 130a', 130b', 130c' at each end of each measuring zone 175a, 175b. In the particular examples, sensors 180a, 180b, 180c, 180d, 180a', 180b', 180c', 180d' are provided both on a first 185 or upper surface of the sensing apparatus and a lower or second 190 surface that is opposite the first 185 surface in a radial direction of the sensing apparatus 110. In a rest / unstrained configuration, the sensors 180a, 180b, 180c, 180d on the first surface 185 are co-linear with each other, the sensors 180a', 180b', 180c', 180d' on the second surface 190 are co-linear with each other and the engaging mechanisms 130a, 130b, 130c, 130a', 130b', 130c' are also co-linear with each other.

For example, measurements for a first measuring zone 175a formed between the first engaging mechanism 130a, 130a' and the third engaging mechanism 130c, 130c' are provided by a sensor 180a provided adjacent the first engaging mechanism 130a, 130a' in a direction toward the third engaging mechanism 130c, 130c' and on the first 185 or upper surface, a sensor 180a' provided adjacent to the first engaging mechanism 130a, 130a' in a direction toward the third engaging mechanism 130c, 130c' and on the second 190 or lower surface, a sensor 180b adjacent the third engaging mechanism 130c, 130c' in a direction toward the first engaging mechanism 130a, 130a' and on the first 185 or upper surface and a sensor 180b' adjacent the third engaging mechanism 130c, 130c' in a direction toward the first engaging mechanism 130a, 130a' and on the second 190 or lower surface.

Similarly, measurements for a second measuring zone 175b formed between the second engaging mechanism 130b, 130b' and the third engaging mechanism 130c, 130c' are provided by a sensor 180d provided adjacent the second engaging mechanism 130b, 130b' in a direction toward the third engaging mechanism 130c, 130c' and on the first 185 or upper surface, a sensor 180d' provided adjacent to the second engaging mechanism 130b, 130b' in a direction toward the third engaging mechanism 130c, 130c' and on the second 190 or lower surface, a sensor 180c adjacent the third engaging mechanism 130c, 130c' in a direction toward the second engaging mechanism 130b, 130b' and on the first 185 or upper surface and a sensor 180c' adjacent the third engaging mechanism 130c, 130c' in a direction toward the second engaging mechanism 130b, 130b' and on the second 190 or lower surface.

In this way, sensors 180a, 180b, 180c, 180d, 180a', 180b', 180c', 180d' are provided at either end of each measurement zone 175a, 175b formed between each pair of engagement mechanisms 130a, 130b, 130c, 130a', 130b', 130c'. Sensors 180a, 180b, 180c, 180d, 180a', 180b', 180c', 180d' are also optionally provided on both the first 185 or upper surface and the second 190 or lower surface of the measuring apparatus at each end of each measurement zone 175a, 175b. In this way, the strain, deformation and/or load experienced over substantially the whole of each measurement zone 175a, 175b can be determined from the measurements taken by the sensors 180a, 180b, 180c, 180d, 180a', 180b', 180c', 180d' at each end of the measurement zone 175a, 175b.

Furthermore, by providing the sensors 180a, 180b, 180c, 180d, 180a', 180b', 180c', 180d' at either end of the measurement zone 175a, 175b, then the sensors 180a, 180b, 180c, 180d, 180a', 180b', 180c', 180d' are located in positions that give a better indicative measurement and/or larger range of strains, as can be seen from Figure 12.

By measuring strain, load and/or deformation over a measuring zone 175a, 175b defined between pairs of discrete, spaced apart fixed locations 155a, 155b, 155c, where the lock pin 20/receptacle 120 and the engagement mechanisms 130a, 130b, 130c, 130a', 130b', 130c'of the sensing apparatus 110 are fixed against relative movement, the deflection of the sensing apparatus 110 is controlled by the movement of the pin receptacle 120 and the sensing apparatus 110 only sees a bulk or gross strain or deformation, i.e. over the respective measurement zone 175a, 175b rather than in a discrete plane. As such, the system is less sensitive to localised plastic deformations, and the localised plastic deformations would have to be very large to produce significant shift to the "zero point" of the measurement. As such, it is possible to make the load pin 20 thinner than would otherwise be the case, as increased thickness of the load pin 20 is not required in order to prevent such localised plastic deformations, which in turn may lead to reduced cost and weight and easier handling and operations of the connector.

In addition, in order to further decrease the effect of any plastic deformations, the sensing apparatus 110 may be calibrated at a given non-zero strain, load or deformation, which may be over 40%, e.g. over 60%, such as from 70% to 100% of the maximum breaking load (MBL). In this way, any effects due to plastic deformation may be further reduced or minimised.

The elongate member 125 is provided with channels 195 for routing cables from the sensors 180a, 180b, 180c, 180d, 180a', 180b', 180c', 180d' to a suitable data collection and/or processing apparatus or to a suitable data transmission device or network for transmitting the sensor data to a remote data collection and/or processing apparatus. The channels 195 can be provided inside and/or on an outer surface of the elongate member 125 as required by the specific arrangement of sensors 180a, 180b, 180c, 180d, 180a', 180b', 180c', 180d' used and/or the specific application. The data transmission device could include suitable devices or network arrangement known in the art, which may be selected depending on the application. For example, subsea applications will require a suitable data transmission apparatus for transmitting data through or surrounded by water. The data transmission may be wired or wireless.

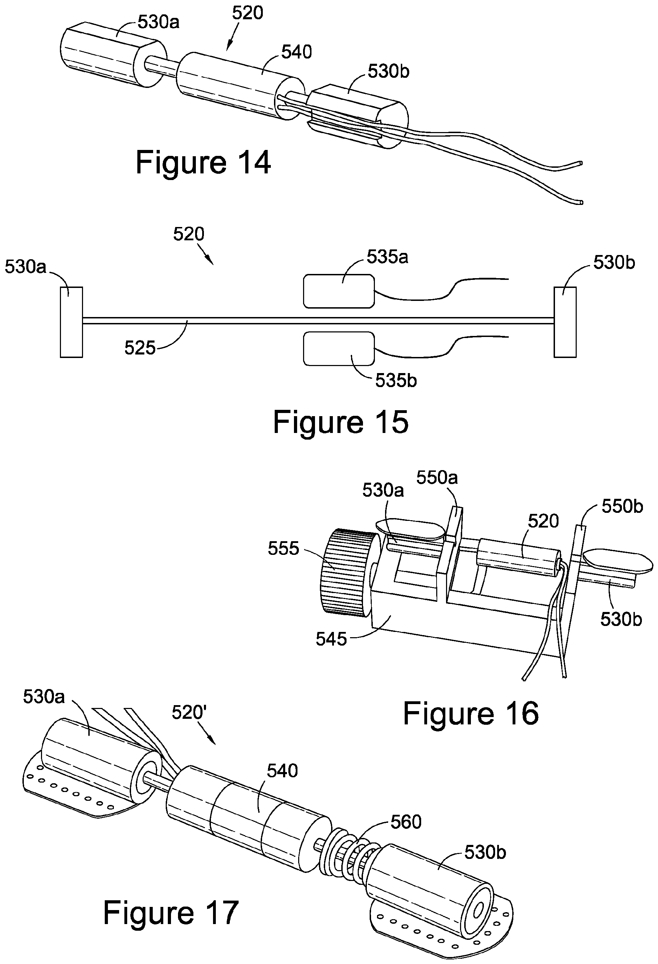

The sensors 180a, 180b, 180c, 180d, 180a', 180b', 180c', 180d' are, in this particular example, strain sensors and may comprise a variety of suitable sensor constructions, such as a wheatstone bridge, MEMS, piezoelectric or other suitable sensor construction. For example, the sensors 180a, 180b, 180c, 180d, 180a', 180b', 180c', 180d' may comprise a silicone based sensor or strain gauge. Advantageously, such a sensor can be resistant to fatigue, and has a bigger amplification factor that allows small strains to be accurately measured. In another example, the sensors 180a, 180b, 180c, 180d, 180a', 180b', 180c', 180d' comprise a foil based strain gauge. In certain applications, the sensors 180a, 180b, 180c, 180d, 180a', 180b', 180c', 180d' can be temperature compensated. However, it will be appreciated that other types of sensors may be used, e.g. vibrating wire sensors such as those shown in and described in relation to Figures 14 to 17.

When the load pin 20 having the sensing apparatus 110 installed is inserted into the pin aperture 40 of the female part 10 and the pin receiving through hole 85 of the male part 15, then the end (i.e. first and second) engaging mechanisms 130a, 130b, 130a', 130b' and thereby the fixed or gripping points 155a, 155b at which the sensing apparatus 110 and the load pin 20 are locked against relative movement are provided in the portions of the receptacle 120 corresponding with the walls of the female part 10, whilst the central (third) engaging mechanism 130c, 130c' / fixing or gripping point 155c, 155c' is provided in the centre of the male part 15. This arrangement may provide a favourable stress profile in the sensing apparatus.

A stub portion 200 is provided at the proximate end 140 of the sensing apparatus 110, adjacent the second or proximal engaging mechanism 130b, 130b' so as to protrude from the receptacle 120 when the sensing apparatus 110 is fully inserted into the receptacle 120. This may permit easy handling of the sensing apparatus 110 and/or routing of any cables.

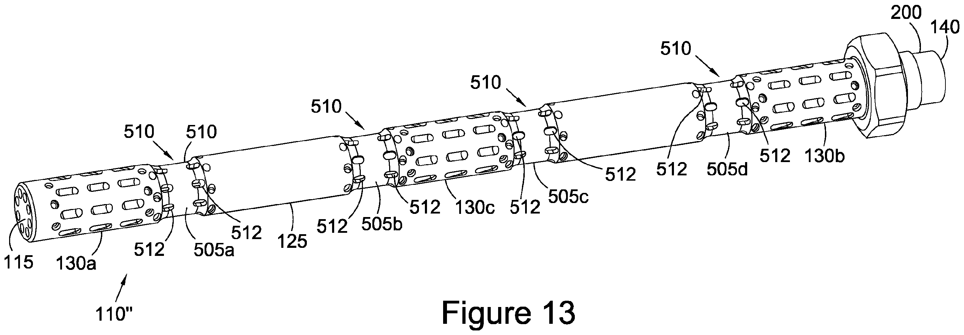

Another example of a sensing apparatus 110" is shown in Figures 13 to 22. The sensing apparatus 110" is similar to that shown in Figures 5 and 8 to 11 and can be used, for example, in the load pin 20 shown in Figures 1 and 4. Most of the features of the sensing apparatus 110" are equivalent to the corresponding features of the sensing apparatus 110 and as such these features are not described again for the sake of brevity. Features that are equivalent or the same are given the same reference numerals. However, the apparatus 110" differs from the apparatus 110 in the arrangement of sensors.

In particular, the apparatus 110" comprises four sensing locations 505a-505d. Two sensing locations 505a and 505b are provided between the first and third engaging mechanisms 130a, 130c, and two sensing locations 505c, 505d are provided between the second and third engaging mechanisms 130b, 130c. Sensing location 505a is provided adjacent the first engaging mechanism 130a, sensing location 505d is provided adjacent to the second engaging mechanism 130b and the other two sensing locations 505b, 505c are provided adjacent and on either side of the third engaging mechanism 130c.

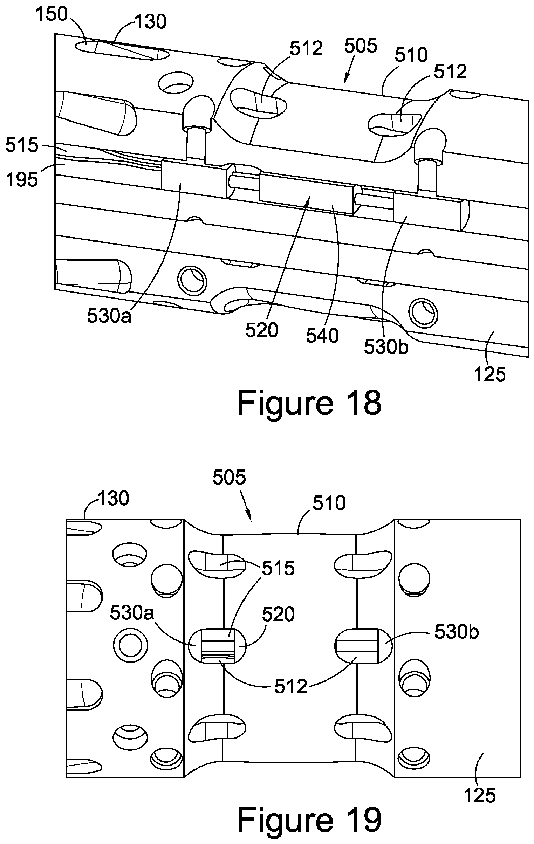

A circumferential recess 510 forming a reduced diameter portion is provided at each sensing location 505a-d. The sensing apparatus 110" is provided with an internal chamber 515 (see Figure 18) that extends within the sensing apparatus 110" A plurality of sensors 520a-d are located within the internal chamber 515 at each sensing location 505a-d. The plurality of sensors 520a-d at each sensing location 505a-d are circumferentially distributed around the internal chamber 515 within the sensing apparatus 110". In particular, two of the sensors 505a, 505c are provided in a radially extending (e.g. vertical) line or plane that is perpendicular to a radially extending (e.g. horizontal) plane or line upon which the other two sensors 520b, 520d are provided. In this way, the sensing apparatus 110" does not need to be provided in a fixed angular orientation as the section modulus can be determined from the sensors 520a-d.

Each recess 510 is provided with slots 512, which can be used to access the sensors 520a-d located in the internal chamber 515, i.e. the slots 512 provide communication between the internal chamber 515 and the exterior of the sensing apparatus 110".

Each sensor 520a-d in this embodiment is a vibrating wire sensor, such as those shown in Figures 14 to 17. In particular, each sensor 520a-d comprises a wire 525 (see Figure 15) tensioned between two mounting portions 530a, b. Each mounting portion 520a, b is fixed (e.g. welded, adhered, or otherwise fixed) to a wall of the hollow channel 515. Coils 535a, b are provided on opposing sides of a portion of the wire 525 that is intermediate the mounting portions 530a, b. An alternating current can be applied to the coils 535a, b in order to induce a plucking or vibration of the wire 525. The alternating current can then be switched off and instead the coils 535a,b can be used to detect a vibrational frequency of the wire 525. Although the coils 535a,b are used for both plucking and detection in this case, it will be appreciated that separate plucking and detections means may be provided.

The sensors 520a-d operate on the principle that when the wire 525 is plucked, it will vibrate at its resonant frequency. As the strain on the wire 525 increases, then the resonant frequency also increases. In particular, the square of the frequency is proportional to the strain in the wire 525. Relative displacement of the two mounting portions 530a, 530b, which are rigidly fixed to the structure of the sensing apparatus 110", result in detectable variations in the resonant frequency of the wire 525. In this way, flexing and varying strain in the sensing apparatus 110" is reflected in the relative positions of the mounting portions 530a,b and thereby in the resonant frequency of the wire 520. The strain can then be measured by determining the resonant frequency of the wire 525. The wire 525 and coils 535a, b are contained within a sensor housing 540. Vibrating wire sensors are used in civil engineering applications (e.g. in buildings and dams) but have been surprisingly found to be particularly suitable to measuring strain in connectors, such as sub-sea connectors.

Optionally, the sensors 525a-d can be set to a required initial strain by using a setting tool 545, such as that shown in Figure 16. In this case, the setting tool 545 has a pair of engaging parts 550a, 550b for engaging the mounting portions 530a, 530b of the sensors 525a-d. At least one of the engaging parts 550a, 550b is movable relative to the other engaging part 550a, 550b under the action of a micrometer screw adjuster 555.

In this way, in use, the engaging parts 550a, 550b of the setting tool 545 can be inserted through the slots 512 in order to engage the mounting portions 530a, 530b of a corresponding sensor 525a-d. An initial strain can be applied to the sensor 525a-d by operating the screw adjuster 555 of the setting tool 545 in order to suitably move the engaging parts 550a, 550b of the setting tool 545 to thereby apply a strain to the sensor 525a-d.

Alternatively, a pre-set sensor 520' can be used, as shown in Figure 17, which comprises a pre-straining device 560 such as a spring or resilient member to apply a pre-strain to the sensor 520'. In this way, there may be less or no need to set the strain of the sensor 520' and the slots 512 would not be required.

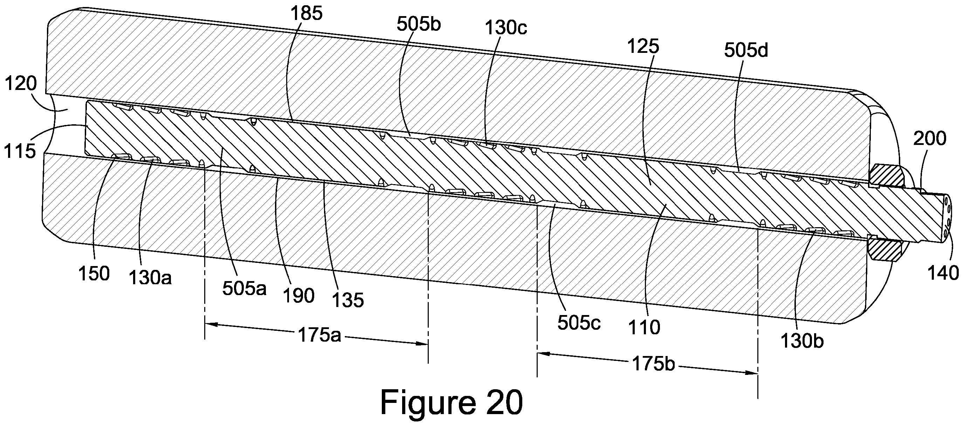

In use, as shown in Figure 20, the sensing apparatus 110" is inserted into a longitudinally extending receptacle 120 in a load pin 20 and can be made to engage the walls of the receptacle with the three spaced apart ball and taper engaging mechanisms 130a-c, as in the example given above in relation to Figures 9 to 11. As such, the sensing apparatus 110" can be used as a slave member to determine strain in the load pin 120 (master member) as detailed above in relation to the embodiments of Figures 1 to 12.

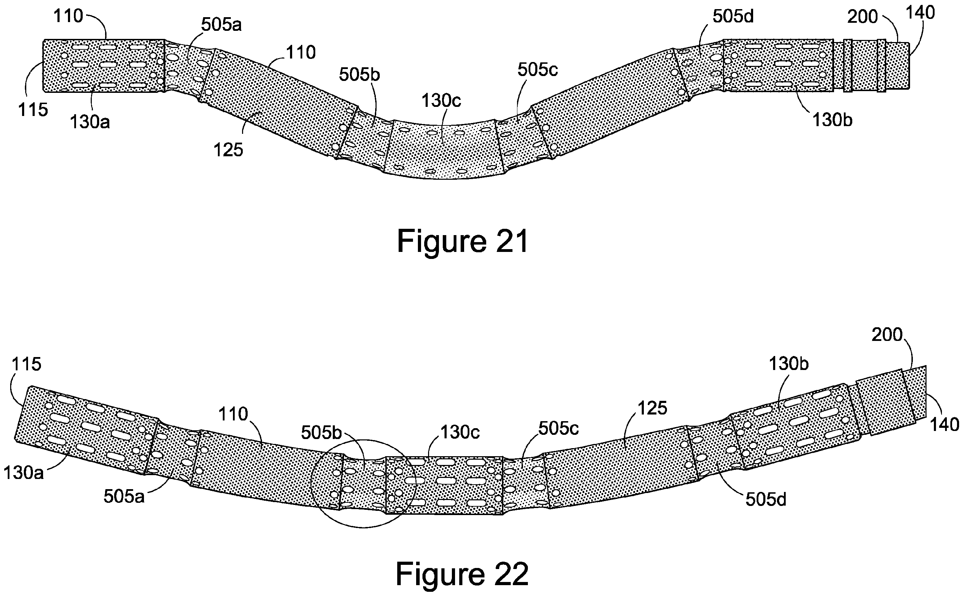

Without wishing to be bound by theory, both shear deformation (as shown in Figure 21) and bend deformation (as shown in Figure 22) are believed to result in a symmetrical deformation of the sensing element 110". In this case, it may be possible to only have two of the four sensing locations, particularly if the loading is repeatable and/or predictable.

It should be understood that the embodiments described herein are merely exemplary and that various modifications may be made thereto without departing from the scope of the invention.

For example, although the examples given above relate to a sensing apparatus 110 provided inside the pin 20 of a subsea connector 5, it will be appreciated that the arrangement described above may be applied to other applications in which a sensing apparatus, particularly a strain, load or deformation sensor, is provided inside a receptacle of another member or device, such as a device or member in or for measuring load, strain and/or deformation in a part of a vehicle, machinery, building or other structure or construction, lifting or supporting machinery, load bearing structures or apparatus, structural support apparatus, members or devices and/or the like. In this case, the device or member having a receptacle in which the sensing apparatus is inserted need not be a load pin for a connector but may be or comprise another suitable device or member. For example, the connector may be or comprise a pulley, and the sensing apparatus 110 may be provided inside a pin or shaft of a pulley wheel.

The above example include three engaging portions 130a, 130b, 130c, 130a', 130b', 130c' / gripping or fixing locations 155a, 155b, 155c, two measurement zones 175a, 175b, sensors 180a, 180b, 180c, 180d, 180a', 180b', 180c', 180d' at either end of each measurement zone, and sensors 180a, 180b, 180c, 180d, 180a', 180b', 180c', 180d' in both first 185 or upper and second 190 or lower surfaces of the sensing apparatus 110. However, it will be appreciated that other numbers of engaging portions 130a, 130b, 130c, 130a', 130b', 130c' / gripping or fixing locations 155a, 155b, 155c and measurement zones 175a, 175b and other sensor 180a, 180b, 180c, 180d, 180a', 180b', 180c', 180d' arrangements, positions or numbers could be used.

The above example describes the application of the measuring apparatus to a load pin 20 and a specific connector 5 type and configuration. However, it will be appreciated that the measuring apparatus need not be inserted in the pin and need not necessarily be used in the above described type of connector, and instead may be used with different types of connector and/or inserted into other components or members that experience a suitable load, strain or deformation.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of any claims. The applicant indicates that aspects of the invention may consist of any such individual feature or combination of features. In view of the foregoing description it will be evident to a person skilled in the art that various modifications may be made within the scope of the invention, as defined by the appended claims, and that the description provides only one example embodiment of how the invention may be implemented.

## Claims

1. A sensing device or apparatus (110) for inserting into a hole, cavity or receptacle (120), the sensing device or apparatus comprising:
an elongate member (125) such as a beam or rod;
one or more sensing elements (180a,180b,180c,180d,180a',180b',180c',180d') for sensing load, strain, deformation or force in or on the elongate member; wherein:
the elongate member is provided with at least one engaging portion (130) configured for locking against an inner wall of the hole, cavity or the receptacle so as to prevent relative motion of the at least one engaging portion with respect to the inner wall of the hole, cavity or receptacle, and wherein:
one or more or each of the engaging portions comprises a ball fixing mechanism.

2. The sensing device or apparatus according to claim 1, wherein one or more or each of the engaging portions comprises a ball and taper or ball and cage fixing mechanism.

3. The sensing device or apparatus according to claim 1 or 2, wherein the elongate member is provided with three or more engaging portions.

4. The sensing device or apparatus according to any preceding claim, wherein the one or more sensing elements is/are configured to measure strain, deformation or force over one or more measuring zones of the elongate member, wherein at least one or each measuring zone is defined between a pair of engaging portions, and wherein optionally
the sensing device or apparatus is configured to determine stress, strain, deformation or load over one or more or each of the measurement zones from measurements of respective two or more longitudinally or axially spaced apart sensing elements provided in the respective measurement zone.

5. The sensing device or apparatus according to any preceding claim, wherein at least one of the sensing elements comprises a vibrating wire or resonant sensor.

6. The sensing device according to any preceding claim, wherein at least one sensing element is provided at each of two or more longitudinally spaced apart sensing locations of the sensing device or apparatus and at least one or each sensing element at the one or more or each sensing location is spaced apart laterally and/or circumferentially around the sensing device or apparatus with respect to at least one or each other sensing element at the respective sensing location.

7. The sensing device according to any preceding claim, wherein the elongate member comprises one or more reduced diameter portions, wherein one or more or each sensing element or sensing location is provided in or corresponds with a respective reduced diameter portion.

8. The sensing device or apparatus according to any preceding claim, wherein the hole, cavity or receptacle is comprised in a shaft, load pin or locking member of a connector and/or a shaft, load pin or locking member of a pulley wheel or other load bearing device or structure.

9. The sensing device or apparatus according to any preceding claim, wherein one or more or each of the engaging portions comprises an interference fit engaging portion for forming an interference fit with the inner wall of the hole, cavity or receptacle.

10. The sensing device or apparatus according to any preceding claim, wherein one or more or each of the engaging portions comprise one or more of:
one or more protruding portions or members, which protrude transversely or radially of at least one adjacent portion of the elongate member;
a one way engaging portion, which permits movement or insertion of at least part of the elongate member in a first direction but opposes movement in a second direction, which is opposite the first direction; and/or
is changeable or switchable between a fixing or engaging configuration, in which the engaging portion(s) is adapted to fix or engage with the receptacle and a movable or non-engaging configuration, in which the engaging portion(s) is adapted to disengage with the receptacle and/or be movable with respect to the receptacle.

11. The sensing device or apparatus according to claim 3 or any claim dependent thereon, wherein at least one first engaging portion is provided at, proximate or toward an end of the elongate member, at least one second engaging portion is provided at, proximate or toward another end of the elongate member, such as an opposite end to the first engaging portion, at least one third engaging portion is provided between or intermediate the ends of the elongate member, in the middle or centrally of the elongate member in a longitudinal direction

12. The sensing device or apparatus according to any preceding claim, wherein one or more of the sensing elements is/are provided on a first or upper surface of the elongate member and one or more of the sensing elements is/are provided on a second surface that is opposite the first surface in a radial or transverse direction.

13. A shaft, locking device or load pin assembly comprising a further elongate member or pin, the further elongate member or pin comprising or defining a hole, cavity or receptacle, the hole, cavity or receptacle being provided with or configured to receive a sensing device or apparatus according to any of claims 1 to 12.

14. A connector, such as a subsea or underwater connector, the connector comprising at least a first part, a second part and a shaft, locking device or load pin assembly according to claim 13.

15. A method of inserting a sensing device or apparatus according to any of claims 1 to 12 into a receptacle, hole or cavity, such as a receptacle, hole or cavity in a shaft, locking device or load pin assembly.

16. A structure, such as a subsea or underwater structure, comprising or configured to receive a shaft, locking device or load pin assembly according to claim 13.

17. A locking device with a hole or receptacle for receiving a sensing apparatus or device according to any of claims 1 to 12.

## Patentansprüche

1. Erfassungsvorrichtung oder -einrichtung (110) zum Einführen in ein Loch, einen Hohlraum oder eine Aufnahme (120), wobei die Erfassungsvorrichtung oder -einrichtung Folgendes umfasst:
eine längliche Komponente (125), wie etwa einen Stab oder eine Stange;
ein oder mehrere Erfassungselemente (180a, 180b, 180c, 180d, 180a', 180b', 180c', 180d') zum Erfassen einer Last, einer Beanspruchung, einer Verformung oder einer Kraft in oder an der länglichen Komponente; wobei:
die längliche Komponente mit mindestens einem Eingriffsabschnitt (130) versehen ist, der dazu ausgelegt ist, gegen eine Innenwand des Lochs, des Hohlraums oder der Aufnahme zu verriegeln, um eine relative Bewegung des mindestens einen Eingriffsabschnitts mit Bezug auf die Innenwand des Lochs, des Hohlraums oder der Aufnahme zu verhindern, und wobei:
ein oder mehrere oder jeder der Eingriffsabschnitte einen Kugelbefestigungsmechanismus umfasst.

2. Erfassungsvorrichtung oder -einrichtung nach Anspruch 1, wobei ein oder mehrere oder jeder der Eingriffsabschnitte einen Befestigungsmechanismus aus Kugel und Kegel oder Kugel und Käfig umfasst.

3. Erfassungsvorrichtung oder -einrichtung nach Anspruch 1 oder 2, wobei die längliche Komponente mit drei oder mehr Eingriffsabschnitten versehen ist.

4. Erfassungsvorrichtung oder -einrichtung nach einem der vorhergehenden Ansprüche, wobei das eine oder die mehreren Erfassungselemente dazu ausgelegt ist/sind, eine Beanspruchung, eine Verformung oder eine Kraft über eine oder mehrere Messzonen der länglichen Komponente zu messen, wobei mindestens eine oder jede Messzone zwischen einem Paar von Eingriffsabschnitten definiert ist, und wahlweise wobei
die Erfassungsvorrichtung oder -einrichtung dazu ausgelegt ist, eine Spannung, eine Beanspruchung, eine Verformung oder eine Last über eine oder mehrere oder jede der Messzonen anhand von Messungen von jeweiligen zwei oder mehreren in Längsrichtung oder axial beabstandeten Erfassungselementen, die in der jeweiligen Messzone bereitgestellt sind, zu bestimmen.

5. Erfassungsvorrichtung oder -einrichtung nach einem der vorhergehenden Ansprüche, wobei mindestens eines der Erfassungselemente eine Schwingsaite oder einen Resonanzsensor umfasst.

6. Erfassungsvorrichtung nach einem der vorhergehenden Ansprüche, wobei an jeder von zwei oder mehr in Längsrichtung beabstandeten Erfassungsorten der Erfassungsvorrichtung oder -einrichtung mindestens ein Erfassungselement bereitgestellt ist und mindestens ein oder jedes Erfassungselement an dem einen oder den mehreren oder jedem Erfassungsort seitlich und/oder umfänglich um die Erfassungsvorrichtung oder -einrichtung mit Bezug auf mindestens ein oder jedes andere Erfassungselement am jeweiligen Erfassungsort beabstandet ist.

7. Erfassungsvorrichtung nach einem der vorhergehenden Ansprüche, wobei die längliche Komponente einen oder mehrere Abschnitte mit reduziertem Durchmesser umfasst, wobei ein oder mehrere oder jedes Erfassungselement oder ein oder mehrere oder jeder Erfassungsort in einem jeweiligen Abschnitt mit reduziertem Durchmesser bereitgestellt ist oder diesem entspricht.

8. Erfassungsvorrichtung oder -einrichtung nach einem der vorhergehenden Ansprüche, wobei das Loch, der Hohlraum oder die Aufnahme in einem Schaft, einem Laststift oder einer Verriegelungskomponente eines Verbinders und/oder einem Schaft, einem Laststift oder einer Verriegelungskomponente einer Riemenscheibe oder einer anderen lasttragenden Vorrichtung oder Struktur umfasst ist.

9. Erfassungsvorrichtung oder -einrichtung nach einem der vorhergehenden Ansprüche, wobei ein oder mehrere oder jeder der Eingriffsabschnitte einen Presspassungseingriffsabschnitt zum Bilden einer Presspassung mit der Innenwand des Lochs, des Hohlraums oder der Aufnahme umfasst.

10. Erfassungsvorrichtung oder -einrichtung nach einem der vorhergehenden Ansprüche, wobei ein oder mehrere oder jeder der Eingriffsabschnitte eines oder mehreres von Folgendem umfasst:
einen oder mehrere vorstehende Abschnitte oder eine oder mehrere vorstehende Komponenten, die von mindestens einem benachbarten Abschnitt der länglichen Komponente quer oder radial vorstehen;
einen Einwegeeingriffsabschnitt, der eine Bewegung oder eine Einführung mindestens eines Teils der länglichen Komponente in eine erste Richtung zulässt, sich einer Bewegung in eine zweite Richtung, die der ersten Richtung entgegengesetzt ist, aber widersetzt; und/oder
zwischen einer Befestigungs- oder einer Eingriffsauslegung, in der der (die) Eingriffsabschnitt(e) angepasst ist, in der Aufnahme befestigt zu werden oder in diese einzugreifen, und einer bewegbaren oder Nichteingriffsauslegung, in der der (die) Eingriffsabschnitt(e) angepasst ist, sich aus der Aufnahme zu lösen und/oder mit Bezug auf die Aufnahme bewegbar zu sein, wechselbar oder umschaltbar ist.

11. Erfassungsvorrichtung oder -einrichtung nach Anspruch 3 oder einem davon abhängigen Anspruch, wobei mindestens ein erster Eingriffsabschnitt an einem Ende der länglichen Komponente, in dessen Nähe oder zu diesem hin bereitgestellt ist, mindestens ein zweiter Eingriffsabschnitt an einem anderen Ende der länglichen Komponente, in dessen Nähe oder zu diesem hin, wie etwa ein dem ersten Eingriffsabschnitt entgegengesetztes Ende, bereitgestellt ist und mindestens ein dritter Eingriffsabschnitt zwischen den Enden der länglichen Komponente oder intermediär zu diesen, in der Mitte oder mittig von der länglichen Komponente in eine Längsrichtung, bereitgestellt ist.

12. Erfassungsvorrichtung oder -einrichtung nach einem der vorhergehenden Ansprüche, wobei ein oder mehrere der Erfassungselemente auf einer ersten oder oberen Fläche der länglichen Komponente bereitgestellt ist/sind und ein oder mehrere der Erfassungselemente auf einer zweiten Fläche, die der ersten Fläche in einer Radial- oder Querrichtung entgegengesetzt ist, bereitgestellt ist/sind.

13. Schaft, Verriegelungsvorrichtung oder Laststiftanordnung, der bzw. die eine weitere längliche Komponente oder einen weiteren länglichen Stift umfasst, wobei die weitere längliche Komponente oder der weitere längliche Stift ein Loch, einen Hohlraum oder eine Aufnahme umfasst oder diese definiert, wobei das Loch, der Hohlraum oder die Aufnahme mit einer Erfassungsvorrichtung oder -einrichtung nach einem der Ansprüche 1 bis 12 versehen oder dazu ausgelegt ist, diese aufzunehmen.

14. Verbinder, wie etwa ein Untersee- oder Unterwasserverbinder, wobei der Verbinder mindestens einen ersten Teil, einen zweiten Teil und einen Schaft, eine Verriegelungsvorrichtung oder einen Laststift nach Anspruch 13 umfasst.

15. Verfahren zum Einführen einer Erfassungsvorrichtung oder -einrichtung nach einem der Ansprüche 1 bis 12 in eine Aufnahme, ein Loch oder einen Hohlraum, wie etwa eine Aufnahme, ein Loch oder ein Hohlraum in einem Schaft, einer Verriegelungsvorrichtung oder einer Laststiftanordnung.

16. Struktur, wie etwa eine Untersee- oder Unterwasserstruktur, die einen Schaft, eine Verriegelungsvorrichtung oder eine Laststiftanordnung nach Anspruch 13 umfasst oder dazu ausgelegt ist, diese aufzunehmen.

17. Verriegelungsvorrichtung mit einem Loch oder einer Aufnahme zum Aufnehmen einer Erfassungseinrichtung oder -vorrichtung nach einem der Ansprüche 1 bis 12.

## Revendications

1. Dispositif ou appareil de détection (110) destiné à être inséré dans un trou, une cavité ou un réceptacle (120), le dispositif ou appareil de détection comprenant :
un élément allongé (125) tel qu'une poutre ou une tige ;
un ou plusieurs éléments de détection (180a, 180b, 180c, 180d, 180a', 180b', 180c', 180d') pour détecter une charge, une contrainte, une déformation ou une force dans ou sur l'élément allongé ; dans lequel :
l'élément allongé est prévu avec au moins une partie de mise en prise (130) configurée pour se bloquer contre une paroi interne du trou, de la cavité ou du réceptacle afin d'empêcher le mouvement relatif de la au moins une partie de mise en prise par rapport à la paroi interne du trou, de la cavité ou du réceptacle, et moyennant quoi dans lequel:
une ou plusieurs ou chacune des parties de mise en prise comprend un mécanisme de fixation à rotule.

2. Dispositif ou appareil de détection selon la revendication 1, dans lequel une ou plusieurs ou chacune des parties de mise en prise comprend (comprennent) un mécanisme de fixation par bille et conicité ou billes et cage.

3. Dispositif ou appareil de détection selon la revendication 1 ou 2, dans lequel l'élément allongé est prévu avec trois parties de mise en prise ou plus.

4. Dispositif ou appareil de détection selon l'une quelconque des revendications précédentes, dans lequel l'un ou les plusieurs éléments de détection est/sont configuré(s) pour mesurer la contrainte, la déformation ou la force sur une ou plusieurs zones de mesure de l'élément allongé, dans lequel au moins une ou chaque zone de mesure est définie entre une paire de parties de mise en prise, et dans lequel facultativement :
le dispositif ou appareil de détection est configuré pour déterminer la tension, la contrainte, la déformation ou la charge sur une ou plusieurs ou chacune des zones de mesure à partir des mesures de deux éléments de détection espacés longitudinalement ou axialement respectifs ou plus, prévus dans la zone de mesure respective.

5. Dispositif ou appareil de détection selon l'une quelconque des revendications précédentes, dans lequel au moins l'un des éléments de détection comprend un fil vibrant ou un capteur résonnant.

6. Dispositif de détection selon l'une quelconque des revendications précédentes, dans lequel au moins un élément de détection est prévu à chacun des deux emplacements de détection longitudinalement espacés ou plus du dispositif ou appareil de détection et au moins un ou chaque élément de détection au niveau d'un ou de plusieurs ou de chaque emplacement de détection est latéralement espacé et/ou circonférentiellement espacé autour du dispositif ou appareil de détection par rapport à au moins un ou chaque autre élément de détection à l'emplacement de détection respectif.

7. Dispositif de détection selon l'une quelconque des revendications précédentes, dans lequel l'élément allongé comprend une ou plusieurs parties de diamètre réduit, dans lequel un ou plusieurs ou chaque élément de détection ou emplacement de détection est prévu dans ou correspond avec une partie de diamètre réduit respective.

8. Dispositif ou appareil de détection selon l'une quelconque des revendications précédentes, dans lequel le trou, la cavité ou le réceptacle est compris dans un arbre, une broche de charge ou élément de blocage d'un connecteur et/ou d'un arbre, une broche de charge ou d'un élément de blocage d'une roue de poulie ou d'un autre dispositif ou d'une autre structure de support de charge.

9. Dispositif ou appareil de détection selon l'une quelconque des revendications précédentes, dans lequel une ou plusieurs ou chacune des parties de mise en prise comprend une partie de mise en prise d'ajustement avec serrage pour former un ajustement avec serrage avec la paroi interne du trou, de la cavité ou du réceptacle.

10. Dispositif ou appareil de détection selon l'une quelconque des revendications précédentes, dans lequel une ou plusieurs ou chacune des parties de mise en prise comprend un ou plusieurs des éléments suivants :
un(e) ou plusieurs parties ou éléments en saillie qui font saillie transversalement ou radialement d'au moins une partie adjacente de l'élément allongé ;
une partie de mise en prise à une voie qui permet le mouvement ou l'insertion d'au moins une partie de l'élément allongé dans une première direction mais s'oppose au mouvement dans une seconde direction qui est opposée à la première direction ; et/ou
peut être modifié ou commuté entre une configuration de fixation ou de mise en prise, dans laquelle la (les) partie(s) de mise en prise est (sont) adaptée(s) pour se fixer ou se mettre en prise avec le réceptacle et une configuration mobile ou sans mise en prise, dans laquelle la (les) partie(s) de mise en prise est (sont) adaptée(s) pour se dégager du réceptacle et/ou être mobile(s) par rapport au réceptacle.

11. Dispositif ou appareil de détection selon la revendication 3 ou l'une quelconque des revendications dépendant de cette dernière, dans lequel au moins une première partie de mise en prise est prévue au niveau de, à proximité ou vers une extrémité de l'élément allongé, au moins une deuxième partie de mise en prise est prévue au niveau de, à proximité ou vers un autre extrémité de l'élément allongé, telle qu'une extrémité opposée à la première partie de mise en prise, au moins une troisième partie de mise en prise est prévue entre ou de manière intermédiaire par rapport aux extrémités de l'élément allongé, au centre ou de manière centrale par rapport à l'élément allongé dans une direction longitudinale.

12. Dispositif ou appareil de détection selon l'une quelconque des revendications précédentes, dans lequel un ou plusieurs des éléments de détection est/sont prévu(s) sur une première surface ou surface supérieure de l'élément allongé et un ou plusieurs des éléments de détection est/sont prévu(s) sur une seconde surface qui est opposée à la première surface dans une direction radiale ou transversale.

13. Ensemble d'arbre, de dispositif de blocage ou de broche de charge comprenant un autre élément allongé ou broche, l'autre élément allongé ou broche comprenant ou définissant un trou, une cavité ou un réceptacle, le trou, la cavité ou le réceptacle étant prévu(e) avec ou configuré(e) pour recevoir un dispositif ou appareil de détection selon l'une quelconque des revendications 1 à 12.

14. Connecteur tel qu'un connecteur sous-marin ou subaquatique, le connecteur comprenant au moins une première partie, une seconde partie et un ensemble d'arbre, de dispositif de blocage ou de broche de charge selon la revendication 13.

15. Procédé pour insérer un dispositif ou appareil de détection selon l'une quelconque des revendications 1 à 12 dans un réceptacle, un trou ou une cavité, tel qu'un réceptacle, un trou ou une cavité dans un ensemble d'arbre, de dispositif de blocage ou de broche de charge.

16. Structure telle qu'une structure sous-marine ou subaquatique, comprenant ou étant configurée pour recevoir un ensemble d'arbre, de dispositif de blocage ou de broche de charge selon la revendication 13.

17. Dispositif de blocage avec un trou ou réceptacle pour recevoir un dispositif ou appareil de détection selon l'une quelconque des revendications 1 à 12.
